# EUROPÄISCHE PATENTSCHRIFT

(11) **EP 1 673 270 B1**
(45) Veröffentlichungstag und Bekanntmachung des Hinweises auf die Patenterteilung: **26.03.2008**
(21) Anmeldenummer: 04790379.4
(22) Anmeldetag: 14.10.2004
(51) Int. Cl.: B61L 23/00, B61L 27/04, B61B 13/04

(54) **SPURGEFÜHRTES TRANSPORTSYSTEM**
GUIDED TRANSPORT SYSTEM
SYSTEME DE TRANSPORT GUIDE

(30) Priorität: 16.10.2003 DE 10348259
(43) Veröffentlichungstag der Anmeldung: 28.06.2006
(73) Patentinhaber: Dürr Systems GmbH, 70435 Stuttgart (DE)
(72) Erfinder: FISCHER, Werner, 64546 Mörfelden-Walldorf (DE); KANSY, Dirk, 67707 Schopp (DE); ZORN, Michael, 65618 Selters im Taunus (DE)
(74) Vertreter: Hoeger, Stellrecht & Partner Patentanwälte
(86) Internationale Anmeldenummer: PCT/EP2004/011513
(87) Internationale Veröffentlichungsnummer: WO 2005/037623

(56) Entgegenhaltungen:
- WO-A-01/56856
- DE-A1- 19 512 107
- DE-A1- 19 843 230
- US-A- 6 005 475
- US-A- 6 109 568
- WHITWAM F: "INTEGRATION OF WIRELESS NETWORK TECHNOLOGY WITH SIGNALING IN THE RAIL TRANSIT INDUSTRY: The future of train control in the transit and urban rail market is closely linked to advances in wireless networks" ALCATEL TELECOMMUNICATIONS REVIEW, ALCATEL, PARIS CEDEX, FR, Januar 2003 (2003-01), XP007005911 ISSN: 1267-7167

## Beschreibung

Die vorliegende Erfindung betrifft ein spurgeführtes Transportsystem, insbesondere eine Einschienenhängebahn, das eine längs einer Fahrspur angeordnete Datenübertragungsleitung und mindestens einen Fahrwagen umfaßt, der längs der Fahrspur verfahrbar ist und mindestens eine mobile Datenübertragungseinheit zum Empfangen von Signalen von der Datenübertragungsleitung und/oder zum Senden von Signalen an die Datenübertragungsleitung umfaßt.

Ein solches spurgeführtes Transportsystem ist beispielsweise aus der DE 195 12 107 A1 bekannt.

Bei dem spurgeführten Transportsystem aus der DE 195 12 107 A1 kommuniziert eine an dem Fahrwagen angeordnete Nahfeldsonde mit einer als Leckwellenleiter ausgebildeten Datenübertragungsleitung, um Informationen über Position, Beladezustand und andere relevante Daten von dem Fahrwagen an eine zentrale Feststation zu übertragen oder um mit anderen Fahrwagen zu kommunizieren.

Da die Datenkommunikation hierbei ausschließlich über die längs der gesamten Fahrstrecke verlaufende Datenübertragungsleitung erfolgt, ist es nicht möglich, dem Fahrwagen gezielt lokale Informationen, in Abhängigkeit von seiner jeweiligen Position, zukommen zu lassen.

Die WO 01/56856 A offenbart ein Kommunikationssystem für eine Einschienenbahn, bei der ein stationäres Steuergerät und ein auf einem Fahrzeug angeordnetes Steuergerät über ein elektrisches Bussystem miteinander kommunizieren. Ferner kann das Transportsystem aus der WO 01/56856 A lokale stationäre Magnetanordnungen umfassen, welche von dem Fahrwagen detektiert werden können, um den Ort des Fahrwagens innerhalb des Transportsystems zu bestimmen.

Der vorliegenden Erfindung liegt die Aufgabe zugrunde, ein spurgeführtes Transportsystem der eingangs genannten Art zu schaffen, bei welchem es möglich ist, dem Fahrwagen in einfacher Weise an seiner aktuellen Position relevante Daten zukommen zu lassen bzw. den Fahrwagen an seiner aktuellen Position relevante Daten an seine Umgebung übermitteln zu lassen.

Diese Aufgabe wird bei einem spurgeführten Transportsystem mit den Merkmalen des Oberbegriffs von Anspruch 1 erfindungsgemäß dadurch gelöst, daß das Transportsystem mindestens eine lokale stationäre Datenübertragungseinheit umfaßt, die einen Signalsender, welcher ein Signal aussendet, das von der mobilen Datenübertragungseinheit des Fahrwagens empfangen wird, und/oder einen Signalempfänger welcher ein Signal empfängt, das von der mobilen Datenübertragungseinheit des Fahrwagens ausgesandt wird, umfaßt.

Der erfindungsgemäßen Erfindung liegt somit das Konzept zugrunde, die mobile Datenübertragungseinheit des Fahrwagens nicht nur zur Kommunikation mit der globalen Datenübertragungsleitung, sondern zugleich auch für die Kommunikation mit der lokalen Datenübertragungseinheit zu benutzen.

Dabei ist die lokale stationäre Datenübertragungseinheit von der zentralen Feststation, welche Daten von dem Fahrwagen über die Datenübertragungsleitung empfängt bzw. über die Datenübertragungsleitung an den Fahrwagen sendet, verschieden.

Vorzugsweise erfolgt die Datenkommunikation zwischen der lokalen stationären Datenübertragungseinheit einerseits und der mobilen Datenübertragungseinheit des Fahrwagens andererseits direkt, ohne Zwischenschaltung der Datenübertragungsleitung.

Die lokale stationäre Datenübertragungseinheit kann eine Vielzahl von für die Funktion des Fahrwagens an seiner aktuellen Position relevante Daten an die mobile Datenübertragungseinheit des Fahrwagens übermitteln.

So kann beispielsweise vorgesehen sein, daß die stationäre Datenübertragungseinheit mit einem Temperatursensor verbunden ist und die von dem Temperatursensor ermittelte lokale Temperatur an die mobile Datenübertragungseinheit des Fahrwagens übermittelt.

Ferner kann vorgesehen sein, daß die lokale stationäre Datenübertragungseinheit mit einer Handhabungsvorrichtung, beispielsweise einer Beladungs- oder Entladungsvorrichtung, des Transportsystems verbunden ist und für einen Beladungs- oder Entladungsvorgang des Fahrwagens relevante Daten von dem Fahrwagen zu der betreffenden Vorrichtung oder von der betreffenden Vorrichtung zu dem Fahrwagen übermittelt.

Ferner kann auch vorgesehen sein, daß die lokale stationäre Datenübertragungseinheit mit einer Bearbeitungsvorrichtung verbunden ist und für die Bearbeitung eines an dem Fahrwagen angeordneten Werkstücks relevante Daten von dem Fahrwagen zu der Bearbeitungsvorrichtung oder von der Bearbeitungsvorrichtung zu dem Fahrwagen übermittelt.

Für die Steuerung des Fahrwagens wird insbesondere eine Information über die jeweils aktuelle Position des Fahrwagens innerhalb des Fahrspursystems des spurgeführten Transportsystems benötigt.

Bei bekannten spurgeführten Transportsystemen erfolgt diese Positionsbestimmung mittels längs der Fahrspur des spurgeführten Transportsystems angeordneten Transpondern, welche mittels eines an dem Fahrwagen angeordneten Lesekopfes abgefragt und ausgelesen werden. Hierbei ist jedoch von Nachteil, daß für die Positionsbestimmung des Fahrwagens ein gesondertes Lesekopf-System erforderlich ist.

Wenn jedoch vorteilhafterweise vorgesehen ist, daß mindestens eine der stationären Datenübertragungseinheiten als ein Positionsindikator ausgebildet ist, der einen Positionssignalsender umfaßt, welcher ein Positionssignal aussendet, das von der mobilen Datenübertragungseinheit des Fahrwagens empfangen wird, so wird hierdurch auf einfache Weise eine hinreichend genaue Bestimmung der Position des Fahrwagens in dem Fahrspurensystem ermöglicht, ohne daß ein zusätzliches System zum Abfragen und Auslesen von längs der Fahrspur angeordneten Transpondern erforderlich ist, da die ohnehin zur Kommunikation mit der Datenübertragungsleitung vorgesehene mobile Datenübertragungseinheit des Fahrwagens zugleich auch für den Empfang des von dem Positionssignalsender ausgesandten Positionssignals benutzt wird.

Daraus ergibt sich ein geringerer apparativer Aufwand im Fahrwagen und eine erhöhte Zuverlässigkeit des Positionsbestimmungssystems.

Um eine möglichst genaue Lokalisierung des Fahrwagens innerhalb des Transportsystems zu ermöglichen, umfaßt das Transportsystem vorzugsweise eine Mehrzahl von Positionsindikatoren, die im Abstand voneinander längs der Fahrspur angeordnet sind.

Um die Genauigkeit der Positionsbestimmung zu erhöhen, kann vorgesehen sein, daß der Positionsindikator eine Zusatzmarkierung umfaßt und daß der Fahrwagen einen Zusatzsensor umfaßt, mittels welchem die Zusatzmarkierung detektierbar ist.

Mittels eines solchen Zusatzsensors ist die aktuelle Position des Fahrwagens relativ zu der Zusatzmarkierung millimetergenau bestimmbar.

Die Zusatzmarkierung kann beispielsweise eine optische Markierung umfassen, und der Zusatzsensor kann einen optischen Sensor umfassen.

Alternativ oder ergänzend hierzu kann vorgesehen sein, daß die Zusatzmarkierung ein elektrisch leitfähiges Element umfaßt und der Zusatzsensor einen induktiven Sensor zum Detektieren des elektrisch leitfähigen Elements umfaßt.

Bei einer bevorzugten Ausgestaltung des erfindungsgemäßen Transportsystems ist vorgesehen, daß das Transportsystem eine Mehrzahl von stationären Datenübertragungseinheiten umfaßt, die im Abstand voneinander längs der Fahrspur angeordnet sind.

Die stationäre Datenübertragungseinheit und die mobile Datenübertragungseinheit des Fahrwagens können grundsätzlich beliebige Sende- bzw. Empfangssysteme umfassen, welche miteinander zur Übermittlung von Daten kommunizieren können.

Bei einer bevorzugten Ausgestaltung der Erfindung ist jedoch vorgesehen, daß der Signalsender der stationären Datenübertragungseinheit beispielsweise als Bluetooth-Sender und/oder als UMTS-Sender und/oder als "Wireless LAN" (WLAN)-Sender ausgebildet ist.

Ferner kann vorgesehen sein, daß die stationäre Datenübertragungseinheit auch einen Signalempfänger umfaßt, der mit der mobilen Datenübertragungseinheit kommunizieren kann.

Insbesondere kann dieser Signalempfänger beispielsweise als Bluetooth-Empfänger und/oder als UMTS-Empfänger und/oder als "Wireless LAN" (WLAN)-Empfänger ausgebildet sein.

Besonders günstig ist es, wenn die stationäre Datenübertragungseinheit einen kombinierten Signalsender/-empfänger umfaßt.

Dieser kombinierte Signalsender/-empfänger kann insbesondere als Bluetooth-Sender/Empfänger und/oder als UMTS-Sender/Empfänger und/oder als "Wireless LAN" (WLAN)-Sender/Empfänger ausgebildet sein.

Ferner ist bei einer bevorzugten Ausgestaltung der Erfindung vorgesehen, daß die mobile Datenübertragungseinheit einen Nahfeldkoppler umfaßt.

Besonders günstig ist es, wenn die mobile Datenübertragungseinheit einen Bluetooth-Empfänger und/oder einen UMTS-Empfänger und/oder einen "Wireless LAN" (WLAN)-Empfänger umfaßt.

Ferner kann vorgesehen sein, daß die mobile Datenübertragungseinheit auch einen Signalsender umfaßt, der mit der stationären Datenübertragungseinheit kommunizieren kann.

Insbesondere kann dieser Signalsender beispielsweise als Bluetooth-Sender und/oder als UMTS-Sender und/oder als "Wireless LAN" (WLAN)-Sender ausgebildet sein.

Besonders günstig ist es, wenn die mobile Datenübertragungseinheit einen kombinierten Signalsender/-empfänger umfaßt.

Dieser kombinierte Signalsender/-empfänger kann insbesondere als Bluetooth-Sender/Empfänger und/oder als UMTS-Sender/Empfänger und/oder als "Wireless LAN" (WLAN)-Sender/Empfänger ausgebildet sein.

Zur Ausgestaltung der Datenübertragungsleitung wurden bisher noch keine näheren Angaben gemacht.

Bei einer bevorzugten Ausgestaltung der Erfindung ist vorgesehen, daß die Datenübertragungsleitung einen Leckwellenleiter umfaßt.

Dieser Leckwellenleiter kann insbesondere als ein offener Koaxialleiter ausgebildet sein.

Besonders bevorzugt wird die Verwendung eines geschlitzten Koaxialleiters als Leckwellenleiter.

Grundsätzlich kann die Datenübertragungsleitung in beliebiger Weise längs der Fahrspur des Fahrwagens angeordnet sein.

Bei einer bevorzugten Ausgestaltung der Erfindung ist vorgesehen, daß das Transportsystem mindestens einen Schienenabschnitt umfaßt, an dem der Fahrwagen verfahrbar geführt ist, und daß die Datenübertragungsleitung an dem Schienenabschnitt gehalten ist.

Insbesondere kann vorgesehen sein, daß die Datenübertragungsleitung zwischen einer Energieübertragungsleitung und einer Lauffläche eines Schienenabschnitts angeordnet ist. Auf diese Weise bildet der Schienenabschnitt mit der daran angeordneten Datenübertragungsleitung und der Energieübertragungsleitung eine besonders kompakte Einheit.

Ferner kann vorgesehen sein, daß auch der Signalsender und/oder der Signalempfänger der stationären Datenübertragungseinheit an dem Schienenabschnitt gehalten ist.

Insbesondere kann vorgesehen sein, daß der Signalsender und/oder der Signalempfänger der stationären Datenübertragungseinheit zwischen einer Energieübertragungsleitung und einer Lauffläche des Schienenabschnitts angeordnet ist.

Der Positionssignalsender kann beispielsweise für seine Energieversorgung an ein stationäres Stromversorgungsnetz angeschlossen sein.

Weitere Merkmale und Vorteile der Erfindung sind Gegenstand der nachfolgenden Beschreibung eines Ausführungsbeispiels.

In den Zeichnungen zeigen:
- Fig. 1: einen schematischen Querschnitt durch eine Laufschiene einer Einschienenhängebahn mit schematischer Darstellung der Trag-und Führungsrollen sowie einer Energieübertragungseinheit und einer mobilen Datenübertragungseinheit eines Fahrwagens der Einschienenhängebahn;
- Fig. 2: eine schematische Seitenansicht der Laufschiene aus Fig. 1, in Abwesenheit des Fahrwagens; und
- Fig. 3: eine schematische Seitenansicht der Laufschiene aus Fig. 1, bei Anwesenheit eines Fahrwagens der Einschienenhängebahn.

Gleiche oder funktional äquivalente Elemente sind in allen Figuren mit denselben Bezugszeichen bezeichnet.

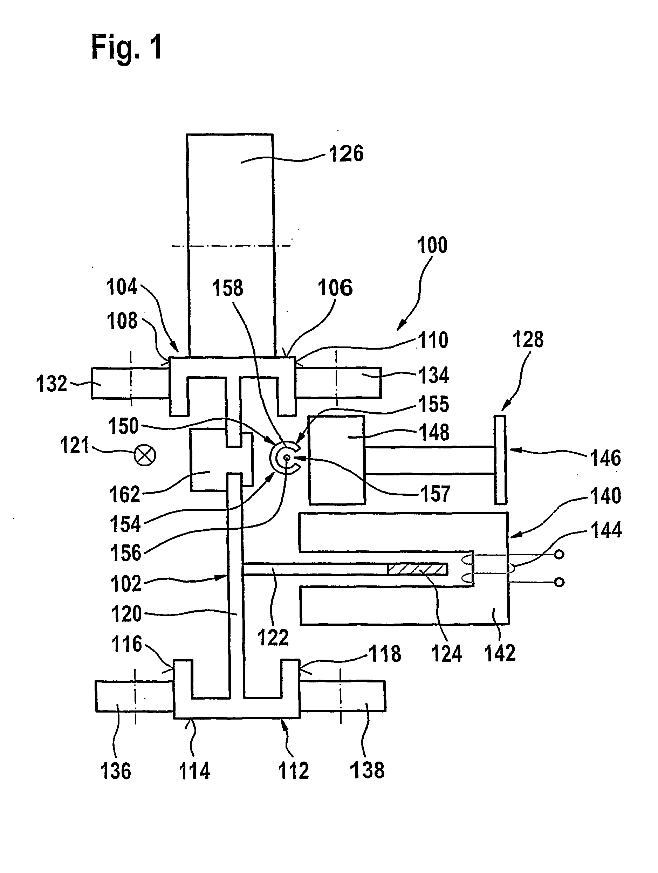

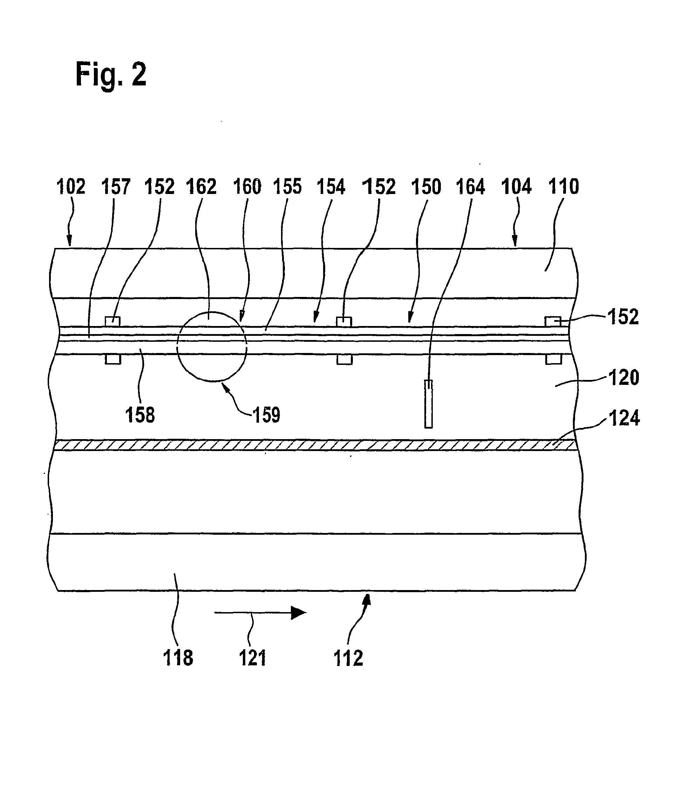

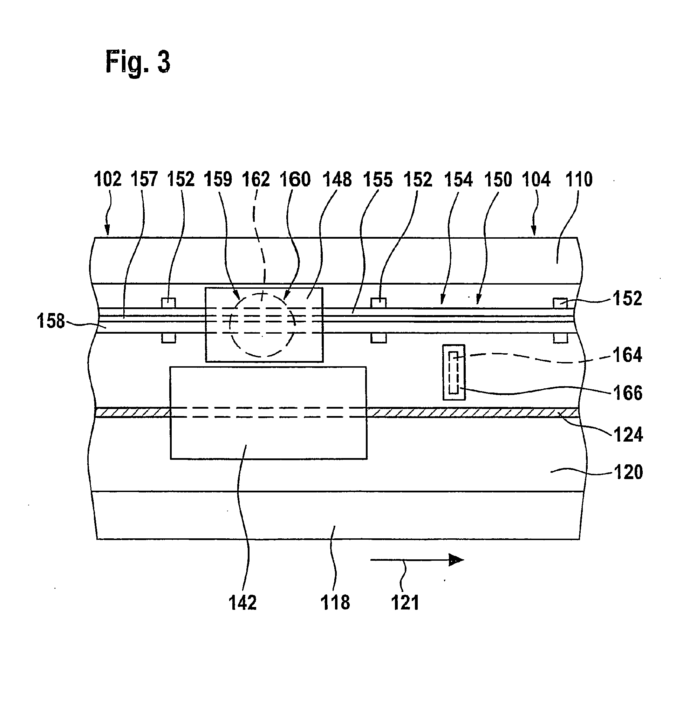

Eine als Ganzes mit 100 bezeichnete Einschienenhängebahn umfaßt eine in Fig. 1 im Querschnitt und in den Fig. 2 und 3 in der Seitenansicht dargestellte Laufschiene 102, die einen oberen Gurt 104 mit einer oberen, im wesentlichen ebenen Lauffläche 106 und zwei seitlichen Führungsflächen 108 und 110 sowie einen unteren Gurt 112 mit einer unteren ebenen Lauffläche 114 und zwei seitlichen Führungsflächen 116 und 118 aufweist.

Beide Gurte sind an ihren den Laufflächen gegenüberliegenden Seiten über einen vertikalen Steg 120 miteinander verbunden, dessen Wände eben sind und parallel zur Laufschienenlängsrichtung 121 verlaufen.

Zwischen den beiden Gurten 104 und 112 steht von einer Seitenwand des Steges 120 ein aus einem elektrisch isolierenden Material gebildeter Stromzuführleitungsträger 122 ab, welcher an seinem dem Steg 120 abgewandten Ende eine Stromzuführleitung 124 trägt.

Auf der oberen Lauffläche 106 der Laufschiene 102 rollt eine Tragrolle 126 eines Fahrwagens 128 der Einschienenhängebahn 100 ab.

Von diesem Fahrwagen 128 sind in den Figuren außer der Tragrolle 126 nur seitliche Führungsrollen 132, 134, 136 und 138, die an den seitlichen Führungsflächen 108, 110, 116 bzw. 118 abrollen, sowie eine Energieübertragungseinheit 140 und eine mobile Datenübertragungseinheit 146 dargestellt.

Die Energieübertragungseinheit 140 umfaßt beispielsweise einen Stromabnehmer 142, der als U-förmiger Ferritkern gestaltet ist und auf dem eine Leiterwicklung 144 angeordnet ist, die mit einer (nicht dargestellten) Stromabnehmer-Elektronikschaltung zur Wandlung eines in der Leiterwicklung induzierten Wechselstromes in eine Gleichspannung verbunden ist.

Die Stromzuführleitung 124 taucht in den U-förmigen Stromabnehmer 142 der Energieübertragungseinheit 140 ein, ohne denselben zu berühren.

Die Energieübertragung der Stromzuführleitung 124 zu der Energieübertragungseinheit 140 erfolgt durch Induktion. Hierzu wird in die Stromzuführleitung 124 und die als Rückleiter dienende Laufschiene 102 ein mittelfrequenter Wechselstrom eingespeist, welcher einen entsprechend zeitlich variierenden magnetischen Fluß in dem Stromabnehmer 142 erzeugt, so daß in der Leiterwicklung 144 ein Wechselstrom induziert und in dem Fahrwagen 128 in eine Gleichspannung für Antriebs- und Steuerungszwecke gewandelt werden kann.

Der Fahrwagen 128 stützt sich mittels mehrerer Tragrollen 126 an der Laufschiene 102 ab und ist mittels der Führungsrollen 132, 134, 136 und 138 an den seitlichen Führungsflächen der Laufschiene 102 geführt.

Ferner ist der Fahrwagen 128 mit einer (nicht dargestellten) Antriebseinheit antreibbar, welche beispielsweise als Reibradantrieb ausgebildet sein kann.

Die mobile Datenübertragungseinheit 146 des Fahrwagens 128 umfaßt einen Nahfeldkoppler 148, welcher an dem Fahrwagen 128 oberhalb der Energieübertragungseinheit 140 gehalten ist und zur bidirektionalen Kommunikation mit einer Datenübertragungsleitung 150 ausgebildet ist, welche sich längs der Laufschiene 102 erstreckt und über Halterungen 152 (siehe Fig. 2) an der dem Nahfeldkoppler 148 zugewandten Seitenwand des Steges 120 der Laufschiene 102 gehalten ist.

Die Datenübertragungsleitung 150 ist als Koaxialleiter 155 mit einem zentralen Kupferleiter 156 und einem denselben umgebenden Mantel 158 ausgebildet, wobei der Mantel 158 auf seiner dem Nahfeldkoppler 148 des Fahrwagens 128 zugewandten Seite einen sich in der Längsrichtung des Koaxialleiters 155 erstreckenden axialen Schlitz 157 aufweist, durch welchen Hochfrequenzwellen aus dem Koaxialleiter 155 aus- oder in den Koaxialleiter 155 eintreten können.

Der in Längsrichtung geschlitzte Koaxialleiter 155 bildet somit einen Leckwellenleiter 154.

Der Leckwellenleiter 154 wird von einer (nicht dargestellten) zentralen Steuerungsstation oder von weiteren Fahrwagen mit Hochfrequenz-Signalen gespeist, welche sich längs des Leckwellenleiters 154 ausbreiten und von dem Nahfeldkoppler 148 des Fahrwagens 128 empfangen werden. Eine (nicht dargestellte) Auswertungsschaltung im Fahrwagen 128 demoduliert diese Hochfrequenz-Signale und wandelt dieselbe in von der Steuerungseinheit des Fahrwagens 128 verwertbare Daten um.

Umgekehrt werden in der Steuerungseinheit des Fahrwagens 128 anfallende Daten durch eine Modulationsschaltung einem Hochfrequenz-Trägersignal aufmoduliert und über den Nahfeldkoppler 148 in den Leckwellenleiter 154 eingespeist, wo sich diese Signale bis zu einem anderen Fahrwagen oder bis zu der stationären Steuerungsstation des Transportsystems 100 ausbreiten.

Außer zur Kommunikation mit der stationären Steuerungsstation und mit anderen Fahrwagen dient die mobile Datenübertragungseinheit 146 des Fahrwagens 128 zugleich auch der Datenkommunikation mit lokalen stationären Datenübertragungseinheiten 159, die insbesondere als Positionsindikatoren 160 ausgebildet sein können, welche der Positionsbestimmung des Fahrwagens 128 dienen.

Längs der Laufschiene 102 sind solche Positionsindikatoren 160 angeordnet, welche jeweils einen Positionssignalsender 162 umfassen, der an dem Steg 120 der Laufschiene 102, auf im wesentlichen derselben Höhe wie die Datenübertragungsleitung 150, angeordnet ist.

Dieser Signalsender 162 sendet ein Positionssignal aus, welches einen dem Positionsindikator 160 zugeordneten Identifikationscode enthält und von dem Nahfeldkoppler 148 des Fahrwagens 128 empfangen wird, wenn der Fahrwagen 128 den betreffenden Positionssignalsender 162 passiert.

Aus dem in dem von dem Positionssignalsender 162 empfangenen Signal enthaltenen Identifikationscode entnimmt die Steuerungseinheit des Fahrwagens 128 die aktuelle Position des Fahrwagens 128 in dem Schienensystem der Einschienenhängebahn 100, da im Speicher der Steuerungseinheit zu jedem Identifikationscode die relevanten Positionsinformationen abgelegt sind.

Der Positionssignalsender 162 und der Nahfeldkoppler 148 können grundsätzlich beliebige Sende- bzw. Empfangssysteme sein, welche miteinander kommunizieren können.

Bei einer bevorzugten Ausgestaltung der Erfindung ist jedoch vorgesehen, daß es sich bei dem Positionssignalsender 162 beispielsweise um einen Bluetooth-Sender und/oder um einen UMTS-Sender und/oder um einen "Wireless LAN" (WLAN)-Sender und bei dem Nahfeldkoppler 148 um einen Bluetooth-Empfänger und/oder um einen UMTS-Empfänger und/oder um einen "Wireless LAN" (WLAN)-Empfänger handelt.

Der Positionssignalsender 162 kann für seine Energieversorgung an eine beliebige Energieversorgungseinrichtung, beispielsweise an ein stationäres Stromversorgungsnetz, angeschlossen sein.

Alternativ oder ergänzend hierzu kann der Positionssignalsender 162 auch einen Akku zum Speichern der benötigten Energie umfassen.

Da der Positionssignalsender 162 eine Streubreite im Bereich von ungefähr 3 cm bis ungefähr 4 cm aufweist, ist auch die mittels des Positionssignals alleine vorgenommene Positionsbestimmung des Fahrwagens 128 mit einer entsprechend großen Ungenauigkeit behaftet.

Um die Genauigkeit der Positionsbestimmung zu erhöhen, umfaßt jeder Positionsindikator 160 außer dem Positionssignalsender 162 noch eine Zusatzmarkierung 164, welche in einem vorgegebenen Abstand von dem Positionssignalsender 162 an der Laufschiene 102 angeordnet ist und mittels eines an dem Fahrwagen 128 angeordneten Zusatzsensors 166 detektierbar ist.

Bei der Zusatzmarkierung 164 kann es sich beispielsweise um eine optische Markierung, z. B. einen schwarzen, weißen oder farbigen Strich, handeln, welcher von einem als optischer Sensor ausgebildeten Zusatzsensor 166 detektierbar ist.

Alternativ oder ergänzend hierzu kann als Zusatzmarkierung 164 auch ein elektrisch leitfähiges Element verwendet werden, welches mittels eines als induktiver Sensor ausgebildeten Zusatzsensors 166 detektierbar ist.

Mittels des Zusatzsensors 166 ist die aktuelle Position des Fahrwagens 128 relativ zu der Zusatzmarkierung 164 millimetergenau bestimmbar.

Mittels des Positionsanzeigesignals, das der Nahfeldkoppler 148 in demselben Zeitpunkt von dem Positionssignalsender 162 erhält, kann die Steuerungseinheit des Fahrwagens 128 ermitteln, welchem Positionsindikator 160 die gerade von dem Zusatzsensor 166 detektierte Zusatzmarkierung 164 zugeordnet ist, und so die genaue Lage des Fahrwagens 128 innerhalb des Schienensystems der Einschienenhängebahn 100 bestimmen.

Vorzugsweise sind der Zusatzsensor 166 und der Nahfeldkoppler 148 an dem Fahrwagen 128 in derselben räumlichen Beziehung angeordnet wie die Zusatzmarkierung 164 und der Positionssignalsender 162 an der Laufschiene 102, so daß der Nahfeldkoppler 148 genau dann die maximale Signalstärke von dem Positionssignalsender 162 empfängt, wenn der Zusatzsensor 166 die Zusatzmarkierung 164 detektiert.

## Patentansprüche

1. Spurgeführtes Transportsystem, insbesondere Einschienenhängebahn (100), umfassend
eine längs einer Fahrspur angeordnete Datenübertragungsleitung (150) und
mindestens einen Fahrwagen (128), der längs der Fahrspur verfahrbar ist und mindestens eine mobile Datenübertragungseinheit (146) zum Empfangen von Signalen von der Datenübertragungsleitung (150) und/oder zum Senden von Signalen an die Datenübertragungsleitung (150) umfaßt,
**dadurch gekennzeichnet, daß** das Transportsystem mindestens eine lokale stationäre Datenübertragungseinheit (159) umfaßt, die einen Signalsender (162), welcher ein Signal aussendet, das von der mobilen Datenübertragungseinheit (146) des Fahrwagens (128) empfangen wird, und/oder einen Signalempfänger, welcher ein Signal empfängt, das von der mobilen Datenübertragungseinheit (146) des Fahrwagens (128) ausgesandt wird, umfaßt.

2. Transportsystem nach Anspruch 1, **dadurch gekennzeichnet, daß** die stationäre Datenübertragungseinheit (159) als ein Positionsindikator (160) ausgebildet ist, der einen Positionssignalsender (162) umfaßt, welcher ein Positionssignal aussendet, das von der mobilen Datenübertragungseinheit (146) des Fahrwagens (128) empfangen wird.

3. Transportsystem nach Anspruch 2, **dadurch gekennzeichnet, daß** der Positionsindikator (160) eine Zusatzmarkierung (164) umfaßt und daß der Fahrwagen (128) einen Zusatzsensor (166) umfaßt, mittels welchem die Zusatzmarkierung (164) detektierbar ist.

4. Transportsystem nach Anspruch 3, **dadurch gekennzeichnet, daß** die Zusatzmarkierung (164) eine optische Markierung und der Zusatzsensor (166) einen optischen Sensor umfaßt.

5. Transportsystem nach einem der Ansprüche 3 oder 4, **dadurch gekennzeichnet, daß** die Zusatzmarkierung (164) ein elektrisch leitfähiges Element und der Zusatzsensor (166) einen induktiven Sensor umfaßt.

6. Transportsystem nach einem der Ansprüche 1 bis 5, **dadurch gekennzeichnet, daß** das Transportsystem eine Mehrzahl von stationären Datenübertragungseinheiten (159) umfaßt, die im Abstand voneinander längs der Fahrspur angeordnet sind.

7. Transportsystem nach einem der Ansprüche 1 bis 6, **dadurch gekennzeichnet, daß** der Signalsender (162) der stationären Datenübertragungseinheit (159) als Bluetooth-Sender und/oder als UMTS-Sender und/oder als "Wireless LAN" (WLAN)-Sender ausgebildet ist.

8. Transportsystem nach einem der Ansprüche 1 bis 7, **dadurch gekennzeichnet, daß** die mobile Datenübertragungseinheit (146) einen Nahfeldkoppler (148) umfaßt.

9. Transportsystem nach einem der Ansprüche 1 bis 8, **dadurch gekennzeichnet, daß** die mobile Datenübertragungseinheit(146) einen Bluetooth-Empfänger und/oder einen UMTS-Empfänger und/oder einen Wireless LAN" (WLAN)-Empfänger umfaßt.

10. Transportsystem nach einem der Ansprüche 1 bis 9, **dadurch gekennzeichnet, daß** die Datenübertragungsleitung (150) einen Leckwellenleiter (154) umfaßt.

11. Transportsystem nach Anspruch 10, **dadurch gekennzeichnet, daß** der Leckwellenleiter (154) als ein offener Koaxialleiter ausgebildet ist.

12. Transportsystem nach Anspruch 10, **dadurch gekennzeichnet, daß** der Leckwellenleiter (154) als ein geschlitzter Koaxialleiter ausgebildet ist.

13. Transportsystem nach einem der Ansprüche 1 bis 12, **dadurch gekennzeichnet, daß** das Transportsystem mindestens einen Schienenabschnitt (102) umfaßt, an dem der Fahrwagen (128) verfahrbar geführt ist, und daß die Datenübertragungsleitung (150) an dem Schienenabschnitt (102) gehalten ist.

14. Transportsystem nach Anspruch 13, **dadurch gekennzeichnet, daß** die Datenübertragungsleitung (150) zwischen einer Energieübertragungsleitung (124) und einer Lauffläche (106) des Schienenabschnitts (102) angeordnet ist.

15. Transportsystem nach einem der Ansprüche 13 oder 14, **dadurch gekennzeichnet, daß** der Signalsender (162) und/oder der Signalempfänger der stationären Datenübertragungseinheit (159) an dem Schienenabschnitt (102) gehalten ist.

16. Transportsystem nach Anspruch 15, **dadurch gekennzeichnet, daß** der Signalsender (162) und/oder der Signalempfänger der stationären Datenübertragungseinheit (159) zwischen einer Energieübertragungsleitung (124) und einer Lauffläche (106) des Schienenabschnitts (102) angeordnet ist.

## Claims

1. Track-guided transport system, in particular suspended monorail system (100), comprising
a data transmission line (150) arranged along a track, and
at least one vehicle (128), which can be run along the track and comprises at least one mobile data handling unit (146) to receive signals from the data transmission line (150) and/or to transmit signals to the data transmission line (150),
**characterized in that** the transport system comprises at least one local stationary data handling unit (159), which comprises a signal transmitter (162), which transmits a signal, which is received by the mobile data handling unit (146) of the vehicle (128), and/or a signal receiver, which receives a signal, which is transmitted from the mobile data handling unit (146) of the vehicle (128).

2. Transport system according to Claim 1, **characterized in that** the stationary data handling unit (159) is configured as a position indicator (160), which comprises a position signal transmitter (162), which transmits a position signal, which is received by the mobile data handling unit (146) of the vehicle (128).

3. Transport system according to Claim 2, **characterized in that** the position indicator (160) comprises an auxiliary marking (164) and that the vehicle (128) comprises an auxiliary sensor (166), by means of which the auxiliary marking (164) is detectable.

4. Transport system according to Claim 3, **characterized in that** the auxiliary marking (164) comprises an optical marking and the auxiliary sensor (166) comprises an optical sensor.

5. Transport system according to one of Claims 3 or 4, **characterized in that** the auxiliary marking (164) comprises an electrically conductive element and the auxiliary sensor (166) comprises an inductive sensor.

6. Transport system according to one of Claims 1 to 5, **characterized in that** the transport system comprises a plurality of stationary data handling units (159), which are spaced from one another along the track.

7. Transport system according to one of Claims 1 to 6, **characterized in that** the signal transmitter (162) of the stationary data handling unit (159) is configured as a bluetooth transmitter and/or as a UMTS transmitter and/or as a "wireless LAN" (WLAN) transmitter.

8. Transport system according to one of Claims 1 to 7, **characterized in that** the mobile data handling unit (146) comprises a near-field coupler (148).

9. Transport system according to one of Claims 1 to 8, **characterized in that** the mobile data handling unit (146) comprises a bluetooth receiver and/or a UMTS receiver and/or a "wireless LAN" (WLAN) receiver.

10. Transport system according to one of Claims 1 to 9, **characterized in that** the data transmission line (150) comprises a leaky waveguide (154).

11. Transport system according to Claim 10, **characterized in that** the leaky waveguide (154) is an open coaxial conductor.

12. Transport system according to Claim 10, **characterized in that** the leaky waveguide (154) is configured as a slotted coaxial conductor.

13. Transport system according to one of Claims 1 to 12, **characterized in that** the transport system comprises at least one rail section (102), on which the vehicle (128) is movably guided, and that the data transmission line (150) is held on the rail section (102).

14. Transport system according to Claim 13, **characterized in that** the data transmission line (150) is arranged between an energy transmission line (124) and a running surface (106) of the rail section (102).

15. Transport system according to one of Claims 13 or 14, **characterized in that** the signal transmitter (162) and/or the signal receiver of the stationary data handling unit (159) is held on the rail section (102).

16. Transport system according to Claim 15, **characterized in that** the signal transmitter (162) and/or the signal receiver of the stationary data handling unit (159) is arranged between an energy transmission line (124) and a running surface (106) of the rail section (102).

## Revendications

1. Système de transport guidé par rails, en particulier un chemin de fer monorail suspendu (100), comprenant
◆ un câble de transmission des données (150) placé le long d'une voie de circulation et
◆ au moins une voiture (128) pouvant se déplacer le long d'une voie de circulation et au moins une unité de transmission de données mobile (146) permettant de recevoir les signaux provenant du câble de transmission des données (150) et/ou d'émettre des signaux au niveau du câble de transmission des données (150),
**caractérisé en ce que** le système de transport comprend au moins une unité de transmission de données stationnaire (159) comprenant un émetteur de signal (162) qui émet un signal reçu par l'unité de transmission de données mobile (146) de la voiture (128) et/ou un récepteur de signal qui reçoit un signal émis par l'unité de transmission de données mobile (146) de la voiture (128).

2. Système de transport selon la revendication 1 **caractérisé en ce que** l'unité de transmission de données stationnaire (159) est conçue comme un indicateur de position (160) comprenant un émetteur de signal de position (162) qui émet un signal de position reçu par l'unité de transmission de données mobile (146) de la voiture (128).

3. Système de transport selon la revendication 2, **caractérisé en ce que** l'indicateur de position (160) comprend un marquage supplémentaire (164) et **en ce que** la voiture (128) comprend un capteur supplémentaire (166) grâce auquel le marquage supplémentaire (164) peut être détecté.

4. Système de transport selon la revendication 3, **caractérisé en ce que** le marquage supplémentaire (164) comprend un marquage optique et le capteur supplémentaire (166) comprend un capteur optique.

5. Système de transport selon l'une des revendications 3 ou 4, **caractérisé en ce que** le marquage supplémentaire (164) comprend un élément conducteur électrique et le capteur supplémentaire (166) comprend un capteur d'induction.

6. Système de transport selon l'une des revendications 1 à 5, **caractérisé en ce que** le système de transport comprend une pluralité d'unités de transmission de données stationnaires (159), placées à une certaine distance les unes des autres le long de la voie de circulation.

7. Système de transport selon l'une des revendications 1 à 6, **caractérisé en ce que** l'émetteur de signal (162) de l'unité de transmission de données stationnaire (159) est conçu comme un émetteur Bluetooth et/ou comme un émetteur UMTS et/ou comme un émetteur « LAN sans fil » (WLAN).

8. Système de transport selon l'une des revendications 1 à 7, **caractérisé en ce que** l'unité de transmission de données mobile (146) comprend un coupleur de champ proche (148).

9. Système de transport selon l'une des revendications 1 à 8, **caractérisé en ce que** l'unité de transmission de données mobile (146) comprend un récepteur Bluetooth et/ou un récepteur UMTS et/ ou un récepteur « LAN sans fil » (WLAN).

10. Système de transport selon l'une des revendications 1 à 9, **caractérisé en ce que** le câble de transmission des données (150) comprend un guide d'ondes à fuite (154).

11. Système de transport selon la revendication 10, **caractérisé en ce que** le guide d'ondes à fuite (154) est conçu comme un conducteur coaxial ouvert.

12. Système de transport selon la revendication 10, **caractérisé en ce que** le guide d'ondes à fuite (154) est conçu comme un conducteur coaxial à fente.

13. Système de transport selon l'une des revendications 1 à 12, **caractérisé en ce que** le système de transport comprend au moins un segment de rail (102) sur lequel la voiture (128) peut se déplacer de manière guidée et **en ce que** le câble de transmission des données (150) est maintenu sur le segment de rail (102).

14. Système de transport selon la revendication 13, **caractérisé en ce que** le câble de transmission des données (150) est placé entre un câble de transmission de l'énergie (124) et une bande de roulement (106) du segment de rail (102).

15. Système de transport selon l'une des revendications 13 ou 14, **caractérisé en ce que** l'émetteur de signal (162) et/ou le récepteur de signal de l'unité de transmission de données stationnaire (159) est maintenu sur le segment de rail (102).

16. Système de transport selon la revendication 15, **caractérisé en ce que** l'émetteur de signal (162) et/ou le récepteur de signal de l'unité de transmission de données stationnaire (159) est placé entre un câble de transmission de l'énergie (124) et une bande de roulement (106) du segment de rail (102).
